(19) Europäisches Patentamt
European Patent Office
Office européen des brevets

(11) **EP 0 780 954 B1**

(12) **FASCICULE DE BREVET EUROPEEN**

(45) Date de publication et mention de la délivrance du brevet:
**16.08.2000 Bulletin 2000/33**

(51) Int Cl.⁷: **H02K 1/27**

(21) Numéro de dépôt: **96402797.3**

(22) Date de dépôt: **18.12.1996**

(54) **Machine électrique synchrone à aimants permanents adaptée à fonctionner à puissance constante sur une large plage de vitesse**

Permanent Magnet-Synchronmaschine geeignet zur Abgabe konstanter Leistung in einen grossen Geschwindigkeitsbereich

Permanent magnet synchronous electric machine adapted to deliver constant power over a large speed range

(84) Etats contractants désignés:
**BE DE ES GB IT LU NL SE**

(30) Priorité: **22.12.1995 FR 9515408**

(43) Date de publication de la demande:
**25.06.1997 Bulletin 1997/26**

(73) Titulaire: **MOTEURS LEROY-SOMER (Société Anonyme française) F-16015 Angouleme Cédex (FR)**

(72) Inventeur: **Manfe, Philippe 16730 Linars (FR)**

(74) Mandataire: **Derambure, Christian Bouju Derambure Bugnion, 52, rue de Monceau 75008 Paris (FR)**

(56) Documents cités:
WO-A-92/22121    FR-A- 2 162 595

- **CONFERENCE RECORD OF THE INDUSTRY APPLICATIONS CONFERENCE IAS ANNUA MEETING, TORONTO, OCT. 3 - 6, 1993, vol. PART 1, 3 Octobre 1993, INSTITUTE OF ELECTRICAL AND ELECTRONICS ENGINEERS, pages 3-8, XP000427426 XU L ET AL: "A NEW DESIGN CONCEPT OF PERMANENT MAGNET MACHINE FOR FLUX WEAKENING OPERATION"**
- **CONFERENCE RECORD OF THE 1986 IEEE INDUSTRY APPLICATIONS SOCIETY ANNUAL MEETING PART 1, 28 Septembre 1986 - 3 Octobre 1986, DENVER, pages 800-805, XP000601852 T. SEBASTIAN ET AL.: "Operating limits of inverter driver permanent magnet motor drives"**
- **PATENT ABSTRACTS OF JAPAN vol. 007, no. 033 (E-157), 9 Février 1983 & JP 57 186965 A (HITACHI SEISAKUSHO KK), 17 Novembre 1982,**

## Description

L'invention concerne une machine électrique synchrone à aimants permanents adaptée à fonctionner à puissance constante sur une large plage de vitesses allant de la vitesse de base à une vitesse maximale égale à trois fois au moins cette vitesse de base, ainsi que le rotor d'une telle machine.

L'invention s'applique notamment au moteur de véhicules électriques, et plus particulièrement à tout type de moteur nécessitant un fonctionnement à puissance constante sur une large plage de vitesses.

On sait que les machines électriques synchrones à aimants permanents sont particulièrement adaptées à développer de très forts couples massiques et donnent toute satisfaction dans les applications correspondant à un fonctionnement à couple constant, la puissance développée augmentant alors proportionnellement à la vitesse.

De ce fait, ces machines ne sont en général pas adaptées à un fonctionnement à puissance constante.

Une solution pour la traction des véhicules automobiles électriques consiste à associer un moteur fonctionnant à couple constant et une boîte de vitesse.

Toutefois, une boîte de vitesse constitue pour un constructeur automobile un organe lourd, encombrant et onéreux.

Les cahiers des charges des constructeurs automobiles réclament la suppression d'une telle boîte de vitesse et la conception d'une machine électrique adaptée à fonctionner à puissance sensiblement constante sur une large plage de vitesses allant de la vitesse de base à une vitesse maximale égale à trois fois environ au moins cette vitesse de base.

Ces cahiers des charges exigent par ailleurs une puissance massique élevée pour limiter le poids de cette machine.

Les machines électriques synchrones à aimants permanents étant réputées pour leur robustesse et leur fiabilité, la demanderesse s'est fixé pour but de concevoir une machine d'un tel type adaptée à répondre aux nouvelles exigences précitées des cahiers des charges.

On connaît par exemple une machine électrique synchrone à aimants permanents qui comporte un rotor dont la surface périphérique est sensiblement complètement recouverte d'aimants. Ces aimants sont de préférence des aimants à forte densité d'énergie, et sont aimantés radialement.

Cette machine électrique synchrone comporte également un stator constituant une armature polyphasée et présentant sur sa surface périphérique intérieure des dents délimitant des encoches dans lesquelles sont bobinées des spires, et des moyens formant variateur pour faire varier la tension et l'intensité du courant traversant les spires, ainsi que le décalage angulaire du flux magnétique des aimants par rapport au flux de l'armature polyphasée.

De façon classique, cette machine synchrone fonctionne à couple sensiblement constant jusqu'à sa vitesse de base qui est atteinte lorsque la tension du courant alimentant la machine atteint sa valeur maximale. Cette dernière est dans le cas d'un véhicule automobile à traction électrique la tension nominale de la batterie équipant ce véhicule.

Pour que cette machine puisse fonctionner à une vitesse notablement supérieure à sa vitesse de base, le variateur qui équipe cette machine est adapté à régler non seulement la tension et l'intensité du courant traversant les spires du stator, mais également le décalage angulaire du flux magnétique des aimants du rotor par rapport au flux magnétique de l'armature polyphasée du stator.

Lorsque l'intensité augmente, le flux produit par l'armature polyphasée augmente et vient s'opposer au flux produit par les aimants, ce qui diminue le couple développé par la machine. Parallèlement, une augmentation du décalage angulaire précité provoque une augmentation de la vitesse de la machine. On obtient ainsi un fonctionnement à puissance constante.

Une telle structure, utilisée principalement pour des servomoteurs, autorise une vitesse maximale qui est pratiquement limitée à une fois et demie environ la vitesse de base.

En effet, pour obtenir une vitesse maximale supérieure à cette limite pratique, il serait nécessaire d'accroître très fortement le courant traversant la machine, et donc de surdimensionner de façon importante les transistors de puissance alimentant une telle machine. Ceci aboutirait à un coût prohibitif.

Cette plage de vitesses est très insuffisante par rapport au but visé par l'invention.

On connaît également un rotor avec pièces polaires montées sur les aimants sans concentration de flux. Le flux produit par les aimants peut être élevé lorsque des aimants à densité d'énergie importante sont utilisés. Cette structure permet donc des couples massiques très élevés en-dessous de la vitesse de base. Cependant, son aptitude au fonctionnement à puissance constante, bien qu'améliorée par rapport à la structure précédente, reste insuffisante pour pouvoir être utilisée dans le cas d'un fonctionnement sur une large plage de vitesses.

On connaît en outre, d'après le EP-A-0378162, un moteur synchrone à aimants du type à concentration de flux. Ce moteur comprend un rotor muni d'aimants positionnés radialement avec une direction d'aimantation azimutale (ou tangentielle), et de pièces polaires disposées entre deux aimants adjacents et faisant office de concentrateurs de flux. La valeur de la réluctance offerte au flux des aimants du côté de l'arbre du moteur est comprise entre dix fois et vingt fois la valeur de la réluctance offerte au flux des aimants du côté de l'entrefer du moteur.

Le but annoncé de cette structure est de réaliser un moteur synchrone pouvant fonctionner dans une plage de vitesses importante, allant d'une vitesse de base donnée à une vitesse maximale égale à quatre fois cette vitesse de base.

Toutefois, cette structure ne constitue pas une solution satisfaisante au problème exposé ci-dessus.

En effet, elle conduit à des moteurs encombrants, et donc lourds et coûteux, car elle ne permet pas d'obtenir le niveau de puissance massique requis dans les cahiers des charges. Elle revient en fait à surdimensionner la machine pour arriver à s'opposer au flux produit par les aimants.

On connaît par ailleurs, par exemple d'après le EP-A-0163 747, un rotor de moteur électrique synchrone comprenant une armature qui comporte des pièces polaires en saillie radialement vers l'extérieur et qui porte, entre deux pièces polaires adjacentes, un ou plusieurs aimants aimantés radialement. Les faces latérales des aimants sont éloignées des faces latérales respectives des pièces polaires adjacentes correspondantes. Les pièces polaires ont un bord périphérique extérieur circulaire de rayon nettement inférieur au rayon du rotor, ce qui produit un entrefer de dimension variable dont l'effet est défavorable au niveau de la composante du flux dans l'axe des aimants.

Au contraire, la distance importante entre chaque aimant et la pièce polaire adjacente, ainsi que le contour convexe arrondi particulier du bord extérieur de ladite pièce polaire, ont pour fonction de donner une distribution de flux magnétique sensiblement sinusoïdale afin d'éliminer les fluctuations du couple du rotor et d'obtenir une rotation régulière de ce dernier.

Cette structure a ainsi pour but d'obtenir un couple très régulier, très lisse, à basse vitesse, ce qui peut être particulièrement intéressant sur une machine-outil pour obtenir une excellente qualité d'usinage rendant inutile une étape ultérieure classique de rectification.

Ce type de rotor n'est en rien adapté à équiper une machine capable de fonctionner à puissance constante sur une large plage de vitesses et présentant une puissance massique et un rendement élevés.

Une machine électrique selon le préambule de la revendication 1 est connue du document WO 92 22 121.

Le but de la présente invention est de remédier aux inconvénients précités des structures connues de machine électrique synchrone à aimants permanents, et de proposer une machine du type précité qui soit peu encombrante, fiable, très économique, et qui soit spécialement adaptée à fonctionner à puissance constante sur la large plage de vitesses définie plus haut.

Un autre but de l'invention est de proposer un rotor adapté à équiper une telle machine électrique synchrone.

Suivant un premier aspect de l'invention la machine électrique synchrone à aimants permanents du type précité est caractérisée en ce que le rotor comporte un nombre prédéterminé de pièces polaires et entre deux pièces polaires adjacentes au moins un aimant permanent d'épaisseur prédéterminée et aimanté radialement ou axialement, chaque paroi sensiblement radiale d'un aimant adjacente à la paroi sensiblement radiale correspondante d'une pièce polaire étant écartée de cette paroi sensiblement radiale d'une distance prédéterminée de façon à empêcher tout risque de démagnétisation de l'aimant en présence d'un courant maximum susceptible de traverser la machine, notamment en cas de mise en court-circuit de cette dernière.

L'homme du métier connaissant la structure de servomoteurs précitée et cherchant à l'améliorer, est dissuadé de penser, pour atteindre le but de l'invention, à créer des pièces polaires ou des pôles saillants au rotor. En effet, cette modification aurait pour premier effet de diminuer le flux magnétique produit par les aimants, alors qu'il sait que dans les machines sans pôles saillants, le couple massique et la puissance massique sont, en-dessous de la vitesse de base, proportionnels à ce flux qui peut être important si on utilise des aimants à forte densité d'énergie.

D'autre part, il est également dissuadé de penser à utiliser des pièces polaires qui auraient pour effet de canaliser le flux du rotor en créant, dans les conditions extrêmes rencontrées dans des moteurs de traction, dans ces pièces et au voisinage de celles-ci des flux susceptibles de démagnétiser les aimants soumis à ces flux.

La distance prédéterminée entre la paroi radiale de l'aimant et la paroi sensiblement radiale adjacente de la pièce polaire correspondante permet ainsi d'éviter tout risque de démagnétisation de l'aimant en cas d'augmentation importante du courant dans la machine par le champ de frange qui passe à l'extérieur de la pièce polaire au niveau de sa paroi sensiblement radiale.

Ces distances prédéterminées ont pour effet de diminuer encore le flux produit par les aimants à vide, ce qui va à l'encontre du souci constant de l'homme du métier de toujours rechercher le couple maximal.

S'il persévérait dans son idée d'utilisation de pièces polaires, il découvrirait alors que le couple maximum est obtenu, en dessous de la vitesse de base, si l'on décale le flux des aimants par rapport au flux du stator, à condition d'augmenter l'intensité du courant par rapport à celle nécessaire dans les servomoteurs sans pôles saillants.

Ceci paraît aller dans le sens d'une diminution de la plage disponible pour le décalage du flux des aimants, et d'une diminution du rendement et de la vitesse maximale de la machine du fait de cette intensité plus importante.

Or, de façon tout à fait surprenante, dans la machine synchrone selon l'invention, le couple résultant est la somme du couple d'interaction relatif au flux des aimants et du couple de réluctance consécutif à la variation de perméance entre les axes d et q (voir plus loin), ce qui compense et au-delà les inconvénients signalés ci-dessus.

Selon un autre aspect de l'invention, le rotor à aimants permanents est caractérisé en ce qu'il est adapté à

**EP 0 780 954 B1**

équiper une machine électrique synchrone selon le premier aspect de l'invention.

Dans le cas où les aimants sont magnétisés avant d'être positionnés sur le rotor, il est utile de pouvoir faciliter leur positionnement. A cet effet, la distance prédéterminée est fixée par un épaulement s'étendant en direction sensiblement tangentielle au pied de la paroi radiale de la pièce polaire, et formant butée en direction tangentielle pour l'aimant adjacent.

Suivant un mode de réalisation, l'espace ménagé entre une paroi sensiblement radiale d'une pièce polaire et la paroi sensiblement radiale adjacente correspondante d'un aimant est au moins partiellement rempli d'un élément en matériau amagnétique.

Ce matériau amagnétique peut être notamment de la colle ou du vernis, afin de permettre ainsi une fixation de l'aimant correspondant.

Suivant un autre mode de réalisation, l'élément en matériau amagnétique présente une forme tubulaire s'étendant axialement le long de la pièce polaire et adapté à être traversé par un fluide de refroidissement.

L'élément en matériau amagnétique peut en outre comporter une pièce de guidage permettant le guidage de l'aimant lors de son positionnement.

Suivant un mode de réalisation avantageux de l'invention, les aimants permanents sont à forte densité d'énergie, notamment en un matériau du type à forte induction rémanente et à champ coercitif modéré à la température de fonctionnement, notamment à 130°C environ.

L'utilisation d'aimants à forte densité d'énergie est connue pour les rotors de moteurs synchrones à fort couple massique. Par contre, l'homme du métier est fortement dissuadé d'utiliser, pour un moteur synchrone adapté à fonctionner à puissance constante sur une large gamme de vitesses, donc avec des courants importants et un risque important de démagnétisation des aimants, des aimants en un matériau à champ coercitif modéré à la température de fonctionnement, tel qu'un alliage Nd Fe B : en effet, c'est le champ coercitif qui définit la capacité de l'aimant à résister à la démagnétisation par un flux antagoniste créé par l'armature polyphasée du stator.

Suivant un mode de réalisation préféré de l'invention, les aimants permanents présentent une épaisseur relativement faible, comprise par exemple entre 4 et 8 mm, de préférence entre 4,5 et 5,5 mm, pour des aimants en alliage Nd Fe B.

Une épaisseur relativement faible des aimants implique dans l'axe radial de ces derniers un entrefer relativement faible, donc une densité relativement importante pour le flux magnétique produit par l'armature polyphasée du stator et canalisé par les pièces polaires.

L'homme du métier, qui connaît le risque de démagnétisation des aimants dans les machines synchrones adaptées à fonctionner à puissance constante sur une large gamme de vitesses, est fortement dissuadé d'utiliser des aimants permanents de faible épaisseur sur le rotor de telles machines.

Ces aimants, qui ne sont disposés que sur une partie de la périphérie du rotor, ont une volume total nettement plus faible que ceux utilisés dans les servomoteurs décrits ci-dessus.

Or, c'est précisément du fait de la possibilité d'utiliser un faible volume d'aimants en un matériau à forte densité d'énergie mais à champ coercitif modéré de coût relativement faible, que la machine et le rotor selon l'invention ont un poids et un coût nettement plus faibles que ceux de l'art antérieur.

D'autres caractéristiques de l'invention sont décrites dans la description qui va suivre en référence aux dessins annexés, donnés uniquement à titre d'exemples non limitatifs, dans lesquels :

- la figure 1 est une vue schématique en élévation d'une tôle magnétique découpée adaptée à former un rotor selon un mode de réalisation de l'invention ;
- la figure 2 est une vue agrandie d'un détail de la figure 1 sur laquelle on a représenté des aimants permanents ;
- la figure 2a est une vue semblable à la figure 2 représentant des variantes de réalisation du rotor selon l'invention ;
- la figure 3 est une vue schématique partielle de dessus d'un rotor correspondant au mode de réalisation des figures 1 et 2, avec les deux sens possibles de magnétisation des aimants ;
- les figures 4a, 4b, 4c sont des schémas représentant respectivement, en élévation, un aimant parallèlèpipèdique aimanté en direction axiale, un aimant en forme de tuile aimanté en direction axiale et un aimant en forme de tuile aimanté en direction radiale ;
- la figure 5 est un schéma représentant les flux respectifs des aimants permanents du rotor et de l'armature polyphasée du stator et le décalage angulaire entre ces deux flux dans la représentation classique en axes d et q ;
- la figure 6 est un diagramme représentant les composantes du couple électromagnétique en fonction du décalage angulaire électrique du flux des aimants par rapport à celui de l'armature polyphasée ;
- la figure 7 est une vue partielle schématique représentant un secteur du rotor et du stator ;
- la figure 8 est une vue semblable à la figure 7 représentant les lignes de flux dans le cas où le flux de l'armature polyphasée est dirigé selon l'axe q ;
- la figure 9 est une vue semblable à la figure 7 représentant les lignes de flux dans le cas où le flux de l'armature polyphasée est dirigé selon l'axe d.

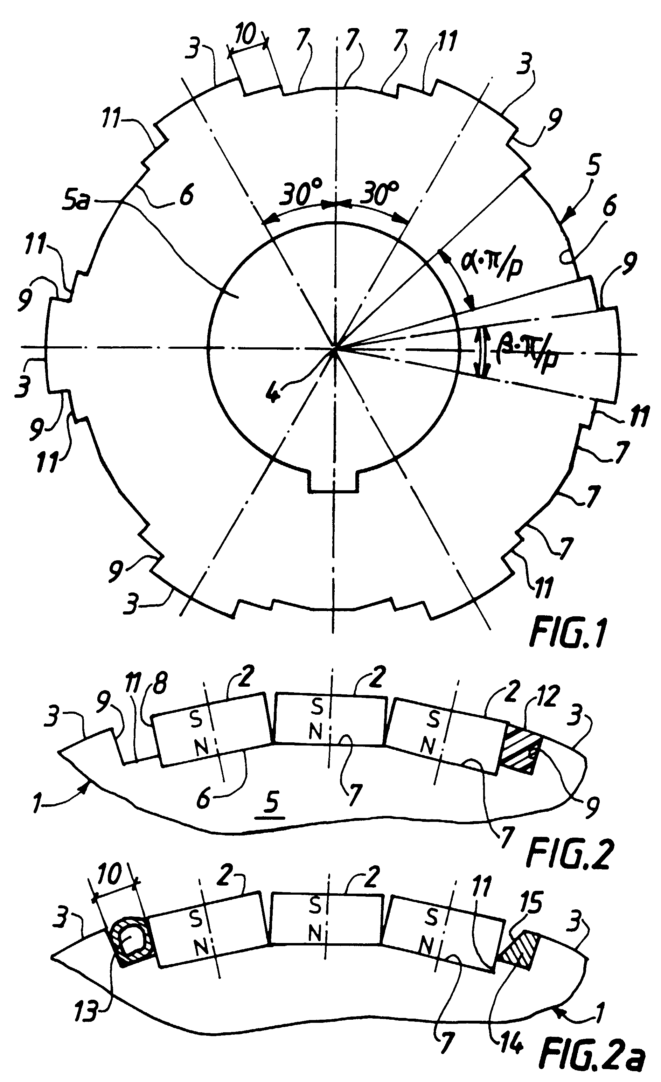

Dans le mode de réalisation représenté aux figures 1 à 3, le rotor 1, qui comporte à sa périphérie des aimants permanents 2, comporte en outre un nombre prédéterminé de pièces polaires 3 réparties régulièrement autour de l'axe 4 du rotor 1.

Dans la réalisation de la figure 1, la tôle magnétique 5 comporte six pièces polaires 3 réparties régulièrement autour de l'axe 4, deux pièces polaires 3 adjacentes étant espacées angulairement l'une de l'autre de 60°.

Chaque tôle 5 comporte une ouverture centrale 5a pour le passage d'un arbre non représenté.

Les pièces polaires 3 sont en saillie radialement vers l'extérieur par rapport au bord périphérique 6 de la tôle 5.

Entre deux pièces polaires 3 adjacentes, le bord périphérique 6 est composé de trois segments 7 qui sont tangents à la même circonférence et qui sont adaptés à servir d'assise à un aimant permanent 2 respectif, comme schématisé aux figures 2 et 2a sur lesquelles on a représenté des aimants de forme parallélépipédique.

Ceci n'est qu'un mode de réalisation parmi d'autres, bien adapté à l'utilisation d'aimants de forme parallèpidédique et de dimensions petites disponibles sur le marché. L'important est que entre deux pièces polaires 3 adjacentes se trouve au moins un aimant permanent 2 pouvant avoir diverses formes, par exemple une forme de tuile, dont le rayon intérieur est alors sensiblement égal au rayon du bord 6 qui est alors circulaire.

Comme on le verra plus loin en détail, les aimants permanents 2 ont une épaisseur déterminée. Ils sont aimantés de préférence radialement, mais peuvent être aimantés axialement c'est-à-dire dans la direction de leur axe, si le nombre de pôles est important.

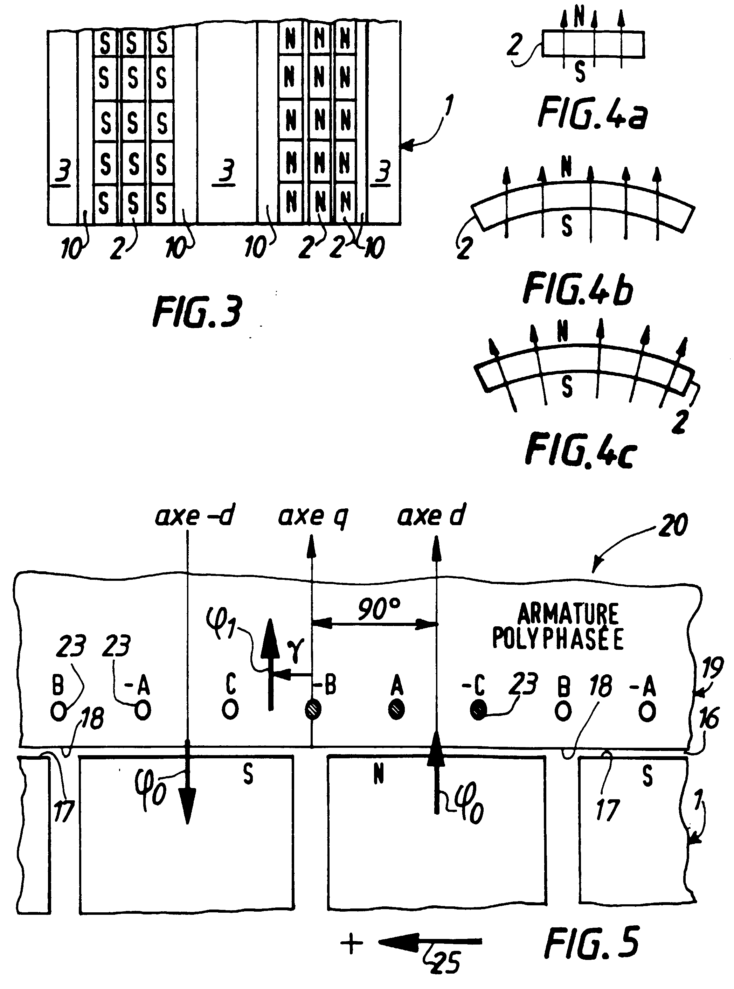

On a représenté à la figure 3 des aimants 2 aimantés axialement ou radialement. Les aimants 2 insérés entre les deux pièces polaires 3 adjacentes situées à la droite de la figure 3 ont tous leur pôle N sur leur face extérieure exposée, et leur pôle S sur leur surface en contact avec leur assise 7. Les aimants insérés entre les pièces polaires de la partie gauche de la figure, de l'autre côté de la pièce polaire centrale, sont au contraire aimantés dans le sens opposé.

Chaque paroi sensiblement radiale 8 d'un aimant 2 adjacente à la paroi sensiblement radiale correspondante 9 d'une pièce polaire 3 est, suivant l'invention, écartée de cette paroi sensiblement radiale 9 d'une distance prédéterminée 10 qui sera définie plus loin.

Dans le mode de réalisation représenté aux figures 1, 2 et 2a, la distance prédéterminée 10 est fixée par un épaulement 11 s'étendant en direction sensiblement tangentielle au pied de la paroi sensiblement radiale 9 de la pièce polaire 3 et formant butée pour l'aimant permanent 2 adjacent.

L'espace ménagé entre une paroi sensiblement radiale 9 d'une pièce polaire 3 et la paroi sensiblement radiale 8 adjacente correspondante d'un aimant permanent 2 est, dans la réalisation représentée aux figures 1 à 3, occupé par de l'air. En variante, cet espace peut être au moins partiellement rempli d'un élément en matériau amagnétique. Ce matériau amagnétique peut être de la colle ou du vernis, comme schématisé en 12 dans la partie droite de la figure 2, pour améliorer la fixation des aimants 2 sur le rotor 1.

L'élément 13 en matériau amagnétique représenté dans la partie gauche de la figure 2a présente une forme tubulaire s'étendant axialement le long de la pièce polaire 3, et est adapté à être traversé par un fluide de refroidissement.

L'élément 14 en matériau amagnétique représenté dans la partie droite de la figure 2a constitue une pièce de guidage permettant le guidage de l'aimant adjacent 2 lors du positionnement de ce dernier sur le rotor 1. Il est donc accolé à la paroi latérale 9 de la pièce polaire 3 et présente une surface 15 opposée à la paroi 9 qui est inclinée pour guider l'aimant 2 jusqu'au bord de l'épaulement 11 vers son assise 7. L'élément 13 décrit ci-dessus pourrait également présenter une paroi sensiblement inclinée telle que la paroi 15 pour aider au positionnement des aimants.

Les aimants permanents 2 sont des aimants à forte densité d'énergie. Ils sont de préférence en un matériau de type à forte induction rémanente Br et à champ coercitif Hc modéré à la température de fonctionnement prévue, aux environs de 130°C notamment, par exemple en alliage Nd Fe B.

Les aimants permanents 2 présentent une épaisseur relativement faible, comprise par exemple entre 4 et 8 mm, de préférence entre 4,5 et 5,5 mm, pour des aimants en alliage Nd Fe B.

La distance prédéterminée 10 est sensiblement égale à l'épaisseur des aimants 2, et peut être comprise entre 4 et 8 mm environ. Ceci protège efficacement les aimants 2 contre le risque de démagnétistion par le champ de frange qui est présent à l'extérieur des parois latérales 9 des pièces polaires 3.

Par contre ceci va dans le sens d'une diminution du flux produit par les aimants à vide (voir plus loin).

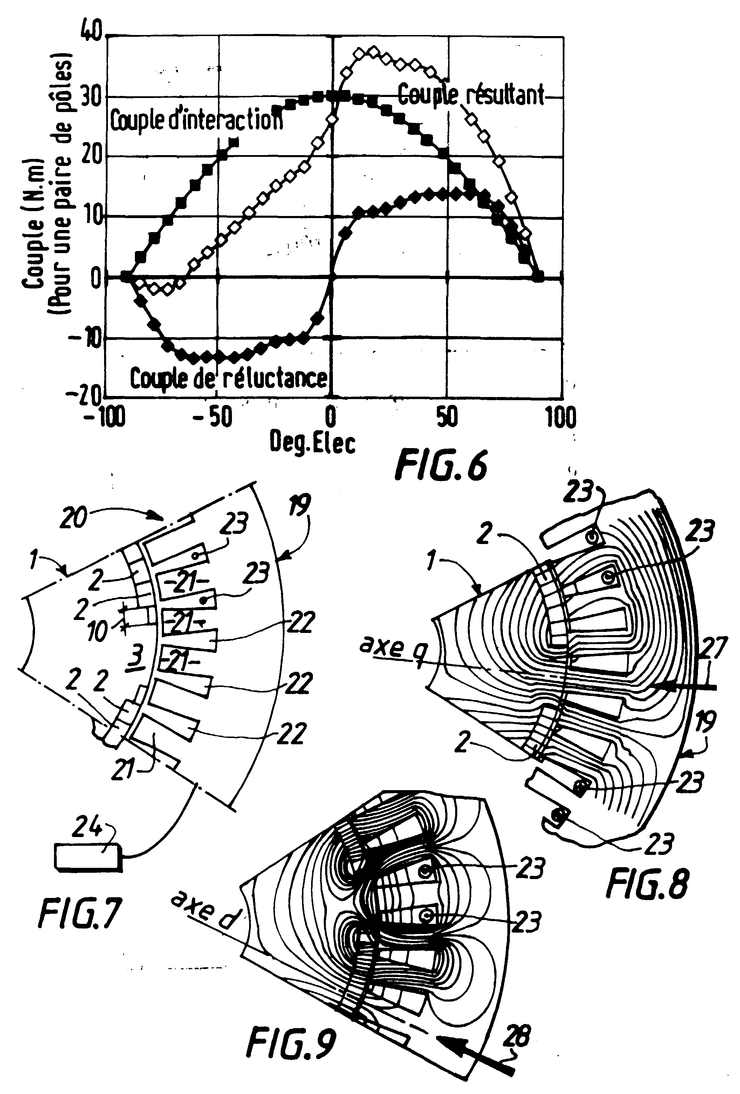

Le rotor décrit ci-dessus est conçu pour équiper une machine électrique synchrone, schématisée en 20 à la figure 7, adaptée à fonctionner à puissance constante sur une large plage de vitesses allant de la vitesse de base à une vitesse maximale égale à trois fois environ au moins cette vitesse de base. Cette machine synchrone comporte un rotor 1 portant à sa périphérie des aimants permanents 2, un stator 19 constituant une armature polyphasée et présentant sur sa surface périphérique intérieure 18 des dents 21 délimitant des encoches 22 dans lesquelles sont bobinées des spires schématisées en 23 à la figure 4, et des moyens formant variateur, schématisés en 24 à la figure 8, adaptés à régler la tension et l'intensité du courant traversant les spires 23, ainsi que le décalage angulaire du flux magnétique des aimants permanents 2 par rapport au flux de l'armature polyphasée du stator 19. Ces moyens formant variateur 24 sont connus en eux-mêmes et n'ont pas besoin d'être décrits en détail ici. Ils comprennent évidemment un capteur (non représenté) de position du rotor qui délivre un signal indispensable pour le réglage de la tension et de l'intensité du courant ainsi que du décalage angulaire précité.

Comme on l'a vu plus haut, les machines synchrones à aimants permanents sont réputées pour fournir de très forts couples massique.

D'une manière générale, ces machines fonctionnent à couple constant à une vitesse qui augmente jusqu'à la vitesse de base lorsqu'on augmente la tension jusqu'à la valeur maximale de celle-ci.

Pour un moteur de traction de véhicule automobile, cette tension maximale est la tension maximale que peut délivrer la batterie de ce véhicule.

Pour entraîner un tel véhicule, la machine électrique synchrone selon l'invention doit pouvoir fonctionner à puissance constante sur une large plage de vitesses allant de la vitesse de base à une vitesse maximale égale à trois fois environ au moins cette vitesse de base.

Au delà de la vitesse de base correspondant à la tension maximale, on sait faire fonctionner une machine synchrone à aimants permanents à puissance constante en augmentant le courant qui traverse les spires du stator et en décalant angulairement le flux des aimants par rapport à celui de l'armature polyphasée.

La tension maximale du courant étant fixée, on sait que les caractéristiques de la machine synchrone dépendent essentiellement de trois paramètres :

- le flux à vide φ 0 produit par les aimants ;
- le flux φ i produit par l'armature polyphasée du stator ;
- le décalage angulaire $\gamma + \pi/2$ du flux φ 0 des aimants par rapport au flux φ i de l'armature polyphasée.

La figure 5 montre la représentation classique des conditions de fonctionnement d'une telle machine avec l'axe d d'un aimant et l'axe q entre deux aimants adjacents. Le décalage angulaire électrique de l'axe q par rapport à l'axe d est de 90° dans le sens de la flèche 25 selon lequel tourne le rotor 1 par rapport à l'armature polyphasée du stator 19.

Le schéma présenté correspond au cas d'une armature triphasée constituée d'une spire par pôle et par phase, la phase A servant de phase de référence. On sait que le flux φ i est toujours situé dans l'axe de la spire traversée par la phase A. Le flux φ 0 des aimants est décalé angulairement d'un angle $\gamma + \pi/2$ par rapport au flux φ i de l'armature polyphasée.

Si l'on fait l'hypothèse de grandeurs variant sinusoïdalement, on sait que le couple électromagnétique Cel s'exprime de la manière suivante :

$$Cel = 3p^2 \left( \underbrace{\varphi_0 . i . \cos \gamma}_{①} + \underbrace{\frac{(lq\,(iq) - Ld\,(id)) . i.^2 \sin 2\gamma}{2}}_{②} \right)$$

Dans cette formule on a :

- φ 0 = flux par pôle et par phase produit par les aimants à vide ;
- Lq (iq) = inductance dans l'axe q par pôle et par phase ;
- Ld (id) = inductance dans l'axe d par pôle et par phase ;
- φ d = $L_d(i_d).i_d = L_d\,(i_d).i.\sin \gamma$
- φ q = $L_q(i_q).i_q = L_q\,(i_q).i.\cos \gamma$
- p étant le nombre de paires de pôles au rotor.

On voit que le couple électromagnétique Cel s'exprime en fonction de deux termes :

- le premier terme correspond au couple généré par les aimants seuls lorsque l'armature polyphasée est alimentée. Cette composante du couple est proportionnelle au flux des aimants et au courant. Elle est maximale pour $\gamma = o$, c'est à dire lorsque les vecteurs représentant les flux φ 0 et φ i sont en quadrature, et décroît lorsque $\gamma$ varie de 0 à 90°.
- le second terme correspond à un couple de réluctance lié à la variation de perméance "vue" par l'armature polyphasée. Cette composante est proportionnelle à la variation d'inductance entre les positions q et d, et varie comme le carré de l'intensité. Le couple de réluctance s'ajoute à celui produit par les aimants lorsque Lq>Ld. Il est maximal pour $\gamma = \pi/4$.

Pour les fonctionnements qui correspondent à une vitesse inférieure à la vitesse de base, c'est-à-dire pour une tension d'alimentation des phases inférieure à la tension maximale disponible, la machine peut fournir son couple maximal. Ce régime correspond à un angle de calage $\gamma$ relativement faible (la valeur de $\gamma$ dépend du point de fonctionnement choisi et des paramètres $\varphi 0$, Lq, Ld) généralement compris entre 0 et 45°.

Au dessus de la vitesse de base, la présence de la pièce polaire disposée entre les aimants accroît considérablement le flux dans l'axe d et autorise une plage de fonctionnement à puissance constante très étendue.

Dans ces conditions, la relation précitée donnant la valeur de Cel montre que l'aptitude d'une machine synchrone à aimants à fournir un couple élevé à une vitesse inférieure à la vitesse de base sera d'autant plus grande que le flux $\varphi$ o produit par les aimants sera grand et que la variation d'inductance entre les positions q et d, Lq-Ld, sera élevée. Ceci est bien connu.

De même, pour une intensité du courant donnée, l'aptitude d'une machine synchrone à aimants au fonctionnement à puissance constante sur une large plage de vitesses sera d'autant plus grande que la quantité Ld/ $\varphi$ o (exprimée en [A]-1) sera élevée. Lorsque l'on recherche également un couple massique élevé, le flux $\varphi$ o produit par les aimants est pris le plus élevé possible. La proposition précédente équivaut alors à rechercher les structures qui présentent la plus forte inductance dans l'axe d.

Dans la structure de rotor décrite ci-dessus en référence aux figures 1 à 3, le flux $\varphi$ o produit par les aimants permanents est plus faible que celui que l'on peut obtenir avec d'autres structures connues de rotor à aimants permanents.

En ce qui concerne le couple électromagnétique, cet état de fait est en grande partie compensé par un effet de saillance très prononcé produisant un couple additionnel de réluctance, qui confère à ce type de machine une bonne aptitude à fournir un couple massique élevé en dessous de la vitesse de base. La principale caractéristique de cette structure réside dans la possibilité d'obtenir des valeurs d'inductance dans l'axe d relativement grandes qui favorisent le fonctionnement à puissance constante sur une plage étendue de vitesses.

En effet, et comme représenté à la figure 6, le couple résultant est la somme du couple d'interaction relatif au flux des aimants et du couple de réluctance consécutif à la variation de perméance entre les axes d et q. Ainsi, en dessous de la vitesse de base, le couple maximum sera obtenu pour un angle $\gamma$ généralement compris entre 15 et 45° électriques). De plus, lorsque le courant est fixé, le couple varie peu dans cette plage de variation de $\gamma$, soit 30° électriques. Cette constatation aura des répercussions importantes pour le choix du capteur de position nécessaire au pilotage de la machine (surtout dans le domaine des basses vitesses) car ce capteur pourra présenter une résolution relativement faible compatible avec des technologies de codage peu coûteuses.

Le couple de réluctance représentant 20 % à 30 % du couple résultant (pour une vitesse inférieure à la vitesse de base, et suivant le dimensionnement retenu), le ratio couple massique/Ampère sera équivalent à celui des meilleurs servomoteurs équipés d'aimants montés en surface, mais avec un volume d'aimants réduit de 20 à 30 % par rapport à ces derniers.

La demanderesse a effectué de nombreux calculs et simulations pour pouvoir déterminer les principaux paramètres géométriques de la machine synchrone à aimants permanents 2 insérés entre des pièces polaires 3 du rotor 1 selon la présente invention.

En plus de ces paramètres géométriques qui définissent l'encombrement de la machine, elle a également cherché à optimiser la géométrie du rotor et le volume d'aimants mis en oeuvre.

Un premier paramètre est l'ouverture polaire relative, $\alpha$, représentée à la figure 1, des aimants 2 situés entre deux pièces polaires 3 adjacentes, et exprimée sous la forme du quotient, inférieur à 1, de l'ouverture polaire $\alpha.\pi/p$ des aimants par l'ouverture polaire $\pi/p$ du rotor.

L'ouverture polaire des aimants ne doit pas dépasser 0,65. En effet, lorsque $\alpha$ dépasse cette valeur, le couple n'augmente plus.

Afin de limiter le flux de fuite des aimants sur la pièce polaire ferromagnétique 3 adjacente correspondante, et d'éliminer tout risque de démagnétisation, les aimants ne sont pas accolés à la pièce polaire. En effet, le flux de l'armature polyphasée est essentiellement canalisé par cette pièce, qui assure ainsi une protection efficace aux aimants. Cependant, une faible partie de ce flux s'engage dans la pièce polaire par les faces latérales 9 de celle-ci. Ceci oblige à réserver un espace correspondant à la distance prédéterminée entre un aimant 2 et la pièce polaire 3 adjacente.

Bien que, comme on l'a dit plus haut, cela revient à diminuer de façon importante le flux magnétique $\varphi$ o des aimants, ce qui va à l'encontre de la pratique et des critères habituels des spécialistes des moteurs électriques, il apparaît que $\alpha$ est compris avantageusement entre 0,45 et 0,55, et est de préférence égal à 0,5 environ, pour obtenir un compromis optimum entre les performances et le coût du moteur synchrone.

De même, l'ouverture polaire $\beta.\pi/p$ de chaque pièce polaire 3 (voir figure 1) correspond à une ouverture polaire relative β qui est avantageusement comprise entre 0,20 et 0,35 pour obtenir l'optimisation précitée, le reste de l'ouverture polaire étant occupé par les distances prédéterminées entre aimant et pièce polaire adjacents l'un à l'autre.

Dans le cas d'aimants en alliage Nd Fe B, l'épaisseur des aimants permettant l'obtention du couple maximal est voisine de 7,5 mm. Toutefois, en limitant l'épaisseur des aimants à 5,0 mm, on obtient près de 95 % du couple et la résistance à la démagnétisation est assurée (la valeur du champ dans les aimants pour les régimes de fonctionnement en charge les plus sévères demeure nettement inférieure à la limite de démagnétisation du matériau, soit environ 700 k A/m à 140° pour un allliage Nd Fe B. On peut donc choisir cette épaisseur dans une plage intéressante allant de 4 à 8 mm environ, ou dans une plage avantageuse allant de 4,5 à 5,5 mm environ.

On a représenté à la figure 8 les lignes de champ obtenues lorsque le flux de l'armature polyphasée est produit par deux spires 23 passant par des encoches situés aux deux extrémités du secteur représenté du stator. Ce flux est dirigé selon la direction de la flèche 27 et est situé dans l'axe q entre deux aimants adjacents, dans l'axe de la pièce polaire.

On a représenté à la figure 9 les lignes de champs obtenues lorsque le flux est produit par deux spires 23 situées au droit de la pièce polaire. Ce flux est dirigé selon la direction de la flèche 28 et est situé dans l'axe d d'un aimant.

Le flux dans l'axe d à la figure 9 est inférieur au flux dans l'axe q à la figure 8. On a représenté à la figure 9 des lignes de champ correspondant à une différence de champ très inférieure à la différence de champ séparant les lignes de champ de la figure 8. Ceci permet de montrer la concentration du flux près des deux parois latérales sensiblement radiales de la pièce polaire correspondante.

Comme toutes les machines synchrones à aimants, les performances en couple massique et la qualité du couple généré (exprimée en pourcentage d'ondulation par rapport à la valeur moyenne du couple) sont tributaires de la forme d'onde du courant d'alimentation.

Pour une même valeur de crête de l'intensité, c'est l'alimentation en créneaux de 150° qui permet le couple massique le plus élevé (supérieur de 15 à 20 % au couple relatif à une alimentation sinusoïdale). Toutefois, ce type d'alimentation génère un couple pulsatoire relativement élevé à basse vitesse (25 % de taux d'ondulation si l'inclinaison de l'armature statorique par rapport au rotor est nulle, et 6 % avec une inclinaison de 0,5 pas dentaire du stator) et nécessite d'alimenter chaque phase de façon indépendante par un pont en H. Le courant débité par la batterie subira dans ce cas d'importantes variaticns à une fréquence égale à huit fois la fréquence d'alimentation.

L'alimentation par des créneaux de courant de 120° permet des performances un peu plus faibles puisque le gain sur le couple massique n'est plus que de 5 à 10 % par rapport à une alimentation sinusoïdale. Par contre, il est possible d'obtenir avec ce type d'alimentation une excellente qualité de couple (moins de 3 % d'ondulation avec une inclinaison adaptée). Le montage traditionnel en pont avec 6 transistors et des bobines connectées en étoile convient à ce type d'alimentation.

L'alimentation par des créneaux de courant de 120° sera cependant limitée au domaine des vitesses inférieures à la vitesse de base. Au delà, une alimentation en courants sinusoïdaux permet un meilleur contrôle de la machine.

La demanderesse a ainsi défini comme suit les caractéristiques d'un moteur synchrone à aimants permanents insérés entre des pièces polaires sur le rotor et ayant une puissance maximale de 27 KW.

Les aimants choisis sont du type Nd Fe B. Ils sont par exemple du type connu sous la dénomination UGISTAB 26 X U (marque déposée) et fabriqué par la société UGIMAG, ce type ayant été choisi pous son aptitude à supporter des températures élevées au détriment de certaines caractéristiques magnétiques.

| | |
|---|---|
| Puissance maximale | 27 KW |
| Tension batterie | 160 V |
| vitesse de base | 2250 min-1 |
| vitesse maximale | 9000 min-1 |
| courant efficace à puissance maximale | |
| - à base vitesse | 145 A |
| - à vitesse max | 120 A |
| Rendement moteur seul à puissance maximale | |
| - à vitesse basse | 0,92 |
| - à vitesse max | 0,88 |
| ROTOR : aimants | UGISTAB 26xU |
| diamètre extérieur tôlerie | 220 mm |
| longueur axiale fer | 110 mm |
| nombre de pôles | 6 |
| masse moto-réducteur diff. | 68 kg |

Le coût de l'énergie spécifique du NdFeB sensiblement inférieur à celui du Sm Co5, et la possibilité de minimiser le volume d'aimants mis en oeuvre dans la structure retenue, suppriment en grande partie le caractère prohibitif lié à l'utilisation d'aimants à haute densité d'énergie dans des machines de grande dimension.

Bien entendu, la présente invention n'est pas limitée aux modes de réalisation décrits ci-dessus, et on peut apporter à ceux-ci de nombreux changements et modifications sans sortir du domaine de l'invention.

On peut notamment changer le type, le nombre et la forme des aimants, augmenter le nombre de pôles.

On comprendra que n'importe quel motoriste sera capable, à partir des caractéristiques définies ci-dessus, de calculer et construire un moteur synchrone conforme à la présente invention.

## Revendications

1. Machine électrique synchrone (20) à aimants permanents (2), adaptée à fonctionner à puissance constante sur une large plage de vitesses allant de la vitesse de base à une vitesse maximale égale à trois fois environ au moins cette vitesse de base, cette machine comportant un rotor (1) portant à sa périphérie (17) des aimants permanents (2), un stator (19) constituant une armature polyphasée et présentant sur sa surface périphérique intérieure (18) des dents (21) limitant des encoches (22) dans lesquelles sont bobinées des spires (23), et des moyens formant variateur (24) pour faire varier la tension et l'intensité du courant traversant les spires (23), ainsi que le décalage angulaire du flux magnétique des aimants (2) par rapport au flux de l'armature polyphasée du stator (19), le rotor (2) comportant un nombre prédéterminé de pièces polaires (3) et entre deux pièces polaires (3) adjacentes au moins un aimant permanent (2) d'épaisseur prédéterminée et aimanté radialement ou axialement, chaque paroi sensiblement radiale (8) d'un aimant (2) adjacente à la paroi sensiblement radiale(9) correspondante d'une pièce polaire (3) étant écartée de cette paroi sensiblement radiale (9) d'une distance (10) caractérisée en ce que ladite distance (10) est prédéterminée de façon à empêcher tout risque de démagnétisation de l'aimant (2) en présence d'un courant maximum susceptible de traverser la machine, notamment en cas de mise en court-circuit de cette dernière.

2. Machine électrique synchrone selon la revendication 1, caractérisée en ce qu'elle constitue un moteur de traction de véhicule automobile électrique alimenté par une batterie d'accumulateurs.

3. Rotor (1) à aimants permanents (2), caractérisé en ce qu'il est adapté à équiper une machine électrique synchrone selon la revendication 1 ou 2.

4. Rotor selon la revendication 3, caractérisé en ce que la distance (10) prédéterminée est fixée par un épaulement (11) s'étendant en direction sensiblement tangentielle au pied de la paroi sensiblement radiale (9) de la pièce polaire (3) et formant butée pour l'aimant adjacent (2).

5. Rotor selon la revendication 3 ou 4, caractérisé en ce que l'espace ménagé entre une paroi sensiblement radiale (9) d'une pièce polaire (3) et la paroi sensiblement radiale (8) adjacente correspondante d'un aimant (2) est au moins partiellement rempli d'un élément en matériau amagnétique.

6. Rotor selon la revendication 5, caractérisé en ce que le matériau amagnétique est de la colle ou du vernis (12).

7. Rotor selon la revendication 5, caractérisé en ce que l'élément (13) en matériau amagnétique présente une forme tubulaire s'étendant axialement le long de la pièce polaire (3) et est adapté à être traversé par un fluide de refroidissement.

8. Rotor selon l'une quelconque des revendications 5 à 7, caractérisé en ce que l'élément (14) en matériau amagnétique constitue une pièce de guidage permettant le guidage de l'aimant (2) adjacent lors du positionnement dudit aimant (2) sur le rotor (1).

9. Rotor selon l'une quelconque des revendications 3 à 8, caractérisé en ce que les aimants permanents (2) sont à forte densité d'énergie, notamment en un matériau du type à forte induction rémanente Br et à champ coercitif Hc modéré à la température de fonctionnement, notamment à 130°C environ, par exemple en alliage NdFeB.

10. Rotor selon l'une quelconque des revendications 3 à 9, caractérisé en ce que les aimants permanents (2) présentent une épaisseur relativement faible, comprise entre 4 et 8 mm, de préférence entre 4,5 et 5,5 mm, pour des aimants en alliage NdFeB.

**11.** Rotor selon l'une quelconque des revendications 3 à 10, caractérisé en ce que la distance (10) prédéterminée est sensiblement égale à l'épaisseur des aimants (2).

**12.** Rotor selon l'une quelconque des revendications 3 à 11, caractérisé en ce que l'ouverture polaire relative des aimants est comprise entre 0,45 et 0,55 environ, et est notamment sensiblement égale à 0,5.

**13.** Rotor selon l'une quelconque des revendications 3 à 12, caractérisé en ce que l'ouverture polaire relative des pièces polaires est comprise entre 0,20 et 0,35 environ.

**14.** Rotor selon l'une quelconque des revendications 3 à 13, caractérisé en ce que les aimants (2) situés entre deux pièces polaires (3) adjacentes ont tous le même sens d'aimantation radial ou axial, et en ce que les sens d'aimantation des aimants (2) situés de part et d'autre d'une même pièce polaire (3) sont opposés.

**Patentansprüche**

**1.** Synchrone Elektromaschine (20) mit Dauermagneten (2), geeignet um mit konstanter Leistung innerhalb eines grossen Drehzahlbereiches zu laufen, der von der Basisdrehzahl bis zu einer maximalen Drehzahl reicht, die mindestens etwa drei Mal dieser Basisdrehzahl entspricht, wobei diese Maschine einen Rotor (1) umfasst, an dessen Umfang (17) Dauermagneten (2) angeordnet sind, sowie einen Stator (19), der eine mehrphasige Armatur bildet und an seiner inneren Umfangsfläche (18) Zähne (21) aufweist, die Kerben (22) abgrenzen, in denen Spiralen (23) aufgewickelt sind, und einen Wandler (24) bildende Mittel, um die die Spiralen (23) durchlaufende Spannung und Stromstärke zu regeln, sowie auch den Winkelversatz des Magnetflusses der Magneten (2) in Bezug auf den Fluss der mehrphasigen Armatur des Stators (19), wobei der Rotor (2) eine vorgegebene Anzahl von Polteilen (3) umfasst, und zwischen zwei benachbarten Polteilen (3) mindestens einen radial oder axial magnetisierten Dauermagneten (2) einer vorgegebenen Dicke, wobei jede etwa radiale Wand (8) eines Magneten (2), die sich einer etwa radialen Wand (9) eines Polteils (3) anschliesst, von dieser etwa radialen Wand (9) in einem Abstand (10) entfernt ist, dadurch gekennzeichnet, dass der besagte Abstand (10) so vorgegeben ist, dass jegliches Entmagnetisierungsrisiko des Magneten (2) in Gegenwart eines maximalen Stromes vermieden wird, der die Maschine durchlaufen könnte, insbesondere bei einem Kurzschluss dieser Maschine.

**2.** Synchrone Elektromaschine nach Anspruch 1, dadurch gekennzeichnet, dass sie einen Zugmotor für ein elektrisches Automobilfahrzeug darstellt, das von einer Akkumulatorbatterie angetrieben wird.

**3.** Rotor (1) mit Dauermagneten (2), dadurch gekennzeichnet, dass er geeignet ist, eine synchrone Elektromaschine nach Anspruch 1 oder 2 auszurüsten.

**4.** Rotor nach Anspruch 3, dadurch gekennzeichnet, dass der vorgegebene Abstand (10) von einem Schulterstück (11) festgelegt ist, das sich in etwa tangentieller Richtung am Fuss der etwa radialen Wand (9) des Polteiles (3) erstreckt und einen Anschlag für den angrenzenden Magneten (2) bildet.

**5.** Rotor nach Anspruch 3 oder 4, dadurch gekennzeichnet, dass der Raum zwischen einer etwa radialen Wand (9) eines Polteils (3) und der entsprechenden angrenzenden etwa radialen Wand (8) eines Magneten (2) zumindest teilweise mit einem Element aus unmagnetischem Material gefüllt ist.

**6.** Rotor nach Anspruch 5, dadurch gekennzeichnet, dass das unmagnetische Material ein Klebstoff oder ein Lack (12) ist.

**7.** Rotor nach Anspruch 5, dadurch gekennzeichnet, dass das Element (13) aus unmagnetischem Material rohrförmig ist, sich axial entlang dem Polteil (3) erstreckt und geeignet ist, um von einer Kühlflüssigkeit durchlaufen zu werden.

**8.** Rotor nach einem der Ansprüche 5 bis 7, dadurch gekennzeichnet, dass das Element (14) aus unmagnetischem Material ein Führungsteil bildet, das die Führung des angrenzenden Magneten (2) beim Positionieren des besagten Magneten (2) auf dem Rotor (1) ermöglicht.

**9.** Rotor nach einem der Ansprüche 3 bis 8, dadurch gekennzeichnet, dass die Dauermagneten (2) eine hohe Energiedichte aufweisen, insbesondere aus einem Werkstoff mit starker remanenter Induktion Br und einem mässigen Koerzitivfeld Hc bei Betriebstemperatur, insbesondere bei etwa 130°C, beispielsweise aus NdFeB-Legierung.

10. Rotor nach einem der Ansprüche 3 bis 9, dadurch gekennzeichnet, dass die Dauermagneten (2) für Magneten aus NdFeB-Legierung eine relativ geringe Dicke zwischen 4 und 8 mm, vorzugsweise zwischen 4,5 und 5,5 mm, aufweisen.

11. Rotor nach einem der Ansprüche 3 bis 10, dadurch gekennzeichnet, dass der vorgegebene Abstand (10) etwa der Dicke der Magneten (2) entspricht.

12. Rotor nach einem der Ansprüche 3 bis 11, dadurch gekennzeichnet, dass die relative Polöffnung der Magneten etwa zwischen 0,45 und 0,55 liegt und insbesondere etwa 0,5 beträgt.

13. Rotor nach einem der Ansprüche 3 bis 12, dadurch gekennzeichnet, dass die relative Polöffnung der Polteile zwischen etwa 0,20 und 0,35 liegt.

14. Rotor nach einem der Ansprüche 3 bis 13, dadurch gekennzeichnet, dass die zwischen zwei benachbarten Polteilen (3) angeordneten Magneten (2) alle die gleiche radiale oder axiale Magnetisierungsrichtung haben, und dass die Magnetisierungsrichtungen der auf beiden Seiten eines gleichen Polteils (3) angeordneten Magneten (2) entgegengesetzt sind.

**Claims**

1. A synchronous electric machine (20) with permanent magnets (2), adapted to operate at constant power over a wide range of speeds ranging from the basic speed to a maximum speed equal to at least approximately three times this basic speed, this machine having a rotor (1), carrying permanent magnets (2) at its periphery (17), a stator (19) constituting a multiphase armature and having, on its internal peripheral surface (18), teeth (21) delimiting notches (22) in which turns (23) are wound, and means forming a variator (24) for varying the voltage and intensity of the current passing through the turns (23), and the angular offset in the magnetic flux of the magnets (2) with respect to the flux of the multiphase armature of the stator (19), the rotor (2) having a predetermined number of pole pieces (3) and, between two adjacent pole pieces (3), at least one permanent magnet (2) with a predetermined thickness and magnetised radially or axially, each substantially radial wall (8) of a magnet (2) adjacent to the corresponding substantially radial wall (9) of a pole piece (3) being separated from this substantially radial wall (9) by a distance (10), characterised in that the said distance (10) is predetermined so as to prevent any risk of demagnetisation of the magnet (2) in the presence of a maximum current liable to pass through the machine, notably in the event of short-circuiting of the latter.

2. A synchronous electric machine according to Claim 1, characterised in that it constitutes an electric vehicle traction engine supplied by a set of accumulators.

3. A rotor (1) with permanent magnets (2), characterised in that it is adapted to equip a synchronous electric machine according to Claim 1 or 2.

4. A rotor according to Claim 3, characterised in that the predetermined distance (10) is fixed by a shoulder (11) extending in a direction substantially tangential to the foot of the substantially radial wall (9) of the pole piece (3) and forming a stop for the adjacent magnet (2).

5. A rotor according to Claim 3 or 4, characterised in that the space provided between a substantially radial wall (9) of a pole piece (3) and the corresponding adjacent substantially radial wall (8) of a magnet (2) is at least partially filled by a part made of non-magnetic material.

6. A rotor according to Claim 5, characterised in that the non-magnetic material is glue or varnish (12).

7. A rotor according to Claim 5, characterised in that the part (13) made of non-magnetic material has a tubular shape extending axially along the pole piece (3) and is adapted to have a cooling fluid pass through it.

8. A rotor according to any one of Claims 5 to 7, characterised in that the part (14) made of non-magnetic material constitutes a guide piece for guiding the adjacent magnet (2) when the said magnet (2) is positioned on the rotor (1).

9. A rotor according to any one of Claims 3 to 8, characterised in that the permanent magnets (2) have a high energy density, notably made of a material of the high remanent induction Br type and with a moderate cohercive field Hc at operating temperature, notably at approximately 130°C, for example made of an NdFeB alloy.

**10.** A rotor according to any one of Claims 3 to 9, characterised in that the permanent magnets (2) have a relatively low thickness, between 4 and 8 mm, and preferably between 4.5 or 5.5 mm, for magnets made of an NdFeB alloy.

**11.** A rotor according to any one of Claims 3 to 10, characterised in that the predetermined distance (10) is substantially equal to the thickness of the magnets (2).

**12.** A rotor according to any one of Claims 3 to 11, characterised in that the relative pole opening of the magnets is between 0.45 and 0.55 approximately, and is notably substantially equal to 0.5.

**13.** A rotor according to any one of Claims 3 to 12, characterised in that the relative pole opening of the pole pieces is between approximately 0.20 and 0.35.

**14.** A rotor according to any one of Claims 3 to 13, characterised in that the magnets (2) situated between two adjacent pole pieces (3) all have the same radial or axial direction of magnetisation, and in that the directions of magnetisation of the magnets (2) situated on each side of the same pole piece (3) are opposite.

EP 0 780 954 B1

FIG.1

FIG.2

FIG.2a

13

## FIG.3

## FIG.4a

## FIG.4b

## FIG.4c

## FIG.5

FIG.6

FIG.7

FIG.8

FIG.9